# EUROPÄISCHE PATENTSCHRIFT

(11) **EP 2 503 205 B1**
(45) Veröffentlichungstag und Bekanntmachung des Hinweises auf die Patenterteilung: **20.11.2013**
(21) Anmeldenummer: 12160663.6
(22) Anmeldetag: 22.03.2012
(51) Int. Cl.: F16L 27/093, F16K 17/04, F16H 7/08

(54) **Sicherheitsventil**
Safety valve
Soupape de sécurité

(30) Priorität: 22.03.2011 DE 202011000643 U
(43) Veröffentlichungstag der Anmeldung: 26.09.2012
(73) Patentinhaber: Elastotec GmbH, 97828 Marktheidenfeld (DE)
(72) Erfinder: Endrich, Manfred, 97828 Marktheidenfeld (DE)
(74) Vertreter: Lösch, Christoph Ludwig Klaus

(56) Entgegenhaltungen:
- EP-A1- 1 369 633
- EP-A1- 1 503 120
- DE-C- 824 709
- US-A1- 2001 003 312

## Beschreibung

Die Neuerung betrifft ein Sicherheitsventil zur Absicherung eines Drucksystems, wie z.B. in EP 150 3120 oder DE 824 709 offenbart wird.

Der Neuerung liegt die Aufgabe zugrunde, ein Sicherheitsventil zur Absicherung eines Drucksystems anzubieten, welches räumlich flexibel anordbar ist.

Diese Aufgabe wird durch ein Sicherheitsventil mit den Merkmalen des Schutzanspruchs 1 gelöst.

Vorteilhafte Ausführungsformen des Sicherheitsventils sind in den Unteransprüchen 2 - 8 beschrieben.

Das neuerungsgemäße Sicherheitsventil zur Absicherung eines Drucksystems, z. B. eines Drucksystems zur Vorspannung von Ketten an Kettenfahrzeugen, insbesondere für ein Druckmedium wie Fett oder Öl, besitzt einen Grundkörper zum Anschluss an das jeweilige Drucksystem und ein Überdruckventil, welches in unterschiedlichen räumlichen Drehpositionen an dem Grundkörper anbringbar ist, wobei das Sicherheitsventil ferner ein Verspannventil aufweist, welches in unterschiedlichen Drehpositionen an dem Grundkörper anbringbar ist.

Hierdurch wird es ermöglicht, dass das weitere Ventilelement in Anpassung an die jeweiligen räumlichen Gegebenheiten des jeweils vorliegenden Drucksystems und zur Herstellung einer verbesserten Bedienungsmöglichkeit durch den jeweiligen Bediener räumlich in einer günstigen räumlichen Drehposition anbringbar ist.

Durch die räumlich günstige Anbringung des Überdruckventils kann zum einen die Austrittöffnung für Druckmedien wie Fett oder Öl im Schadensfall räumlich günstig angeordnet werden.

Ferner können etwaige am Überdruckventil angeordnete weitere Zugangsbereiche (z.B. eine Messöffnung) räumlich für den Bediener günstig angeordnet werden.

Vorteilhafterweise besitzt das Überdruckventil eine Abströmöffnung zur Abführung des unter einem Überdruck stehenden Druckmediums.

Hierdurch kann das bei Überdruck durch den Grundkörper ausströmende Druckmedium aus dem Grundkörper entfernt und insbesondere seitlich in den jeweiligen Überdruckbereich zur Abführung eingeführt werden.

Das Sicherheitsventil besitzt ferner eine Druckfeder, die in einem Federraum ein von der Druckfeder beaufschlagtes Dichtelement aufweist.

Durch diese Druckfeder wird das Dichtelement (z.B. eine Kugel) zur Abdichtung des Überdruckventils bei Normalbetrieb angedrückt. Bei auftretendem Überdruck wird das Dichtelement abgehoben und ermöglicht ein Abströmen des unter Überdruck stehenden Druckmediums.

Nach einer weiteren vorteilhaften Ausführungsform weist die Abströmöffnung eine Verbindung zum Federraum auf. Hierdurch kann bei Überdruck abströmendes Druckmedium in den Federraum eindringen und dort neben einer Möglichkeit des Abflusses durch eine ebenfalls im Federraum angeordnete Abflussbohrung das Dichtelement mit einer zur Federkraft ergänzenden Kraft beaufschlagen und somit einen erneuten Abschluss des anfangs geöffneten Dichtelements erreichen. Hierdurch wird die bei der Abströmöffnung auftretende Abströmkraft des Druckmediums genutzt, um das anfangs geöffnete Überdruckventil wieder zu schließen.

Ein derart ausgebildetes Sicherheitsventil besitzt somit eine Schnellschlussfunktion.

Nach einer weiteren vorteilhaften Ausführungsform kann das Sicherheitsventil bzw. das Überdruckventil eine Messöffnung zur Bestimmung des jeweiligen Mediumdrucks aufweisen. Damit hat das Überdruckventil einen Überdruckbereich und zum anderen einen Messbereich und ist damit mit zwei Funktionen ausgestattet.

Ferner kann nach einer weiteren Ausführungsform der Grundkörper ein weiteres Ventil zur Zuführung des Druckmediums in das Drucksystem aufweisen.

Durch dieses weitere Ventil kann z.B. zur Befüllung des Drucksystems mit dem jeweiligen Druckmedium Fett oder Öl zugeführt werden.

Gemäß einer weiteren vorteilhaften Ausführungsform besitzt das weitere Ventil eine Drossel zur Begrenzung der Zuführgeschwindigkeit bei Zuführung des Druckmediums. Hierdurch kann die Geschwindigkeit der Zuführung von Druckmedien bei der Befüllung des Drucksystems gesteuert und insbesondere verlangsamt werden. Eine zu schnelle Befüllung und ggf. Überfüllung wird damit vermieden.

Vorteilhafterweise ist die Drossel z.B. als Lochscheibe ausgebildet und kann bei zugeführtem Fett oder Öl als Druckmedium durch Hindurchführung durch die jeweiligen Löcher der Lochscheibe die entsprechende Begrenzung der Zuführgeschwindigkeit ermöglichen.

Die Neuerung ist anhand von Ausführungsbeispielen in den Zeichnungsfiguren weiter erläutert. Es zeigen:
- FIG 1: eine Seitenansicht des neuerungsgemäßen Sicherheitsventils,
- FIG 2: eine Draufsicht auf das Sicherheitsventil gemäß Fig. 1,
- FIG 3: eine perspektivische Ansicht des Sicherheitsventils gemäß Fig. 1 und 2,
- FIG 4: ein Schnitt A-A nach FIG 1 durch das Sicherheitsventil sowie
- FIG 5: ein Detail Z des Sicherheitsventils nach FIG 4.

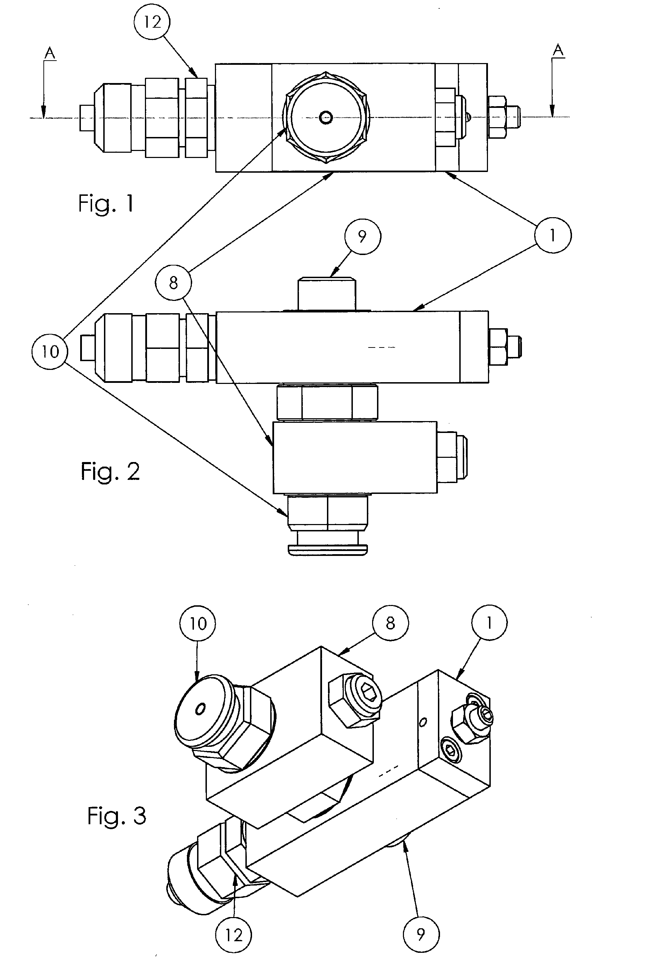

FIG 1 zeigt eine Seitenansicht des Sicherheitsventils, wobei das weitere Ventil 10 zur Zuführung von Druckmedium, das Vorspannventil 8 und das Überdruckventil 1 einsehbar sind. Auf der gegenüberliegenden Seite des Überdruckventils 1 befindet sich eine an sich bekannte Messkupplung 12, die in der nicht einsehbaren Messöffnung 7 (vgl. FIG 2) des Überdruckventils 1 gehaltert ist.

Fig. 2 und 3 zeigen weitere Ansichten des Sicherheitsventils nach Fig. 1.

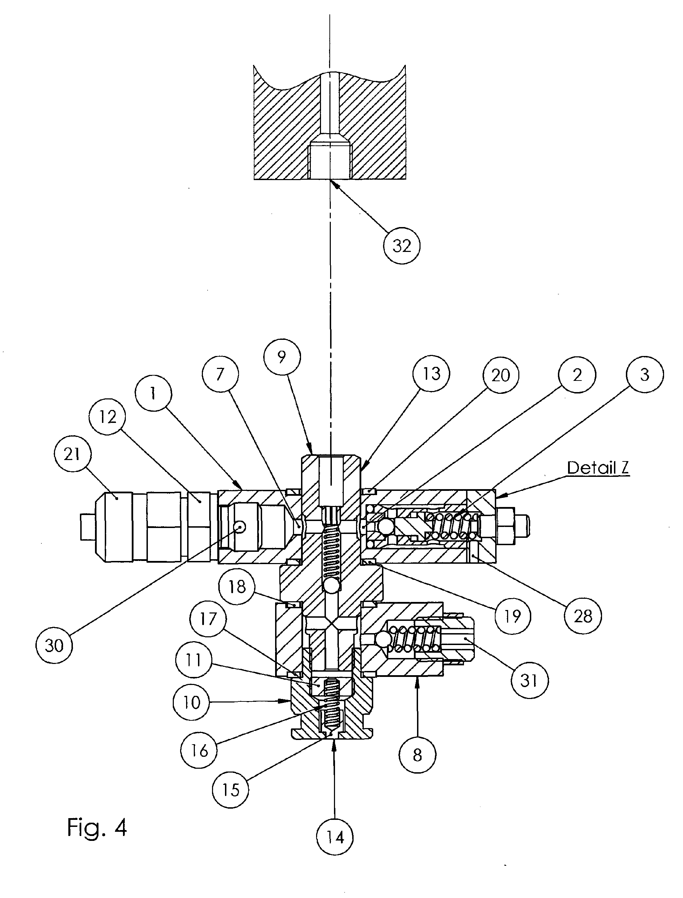

In der Teilschnittdarstellung nach FIG 4 wird gezeigt, wie der an einem schematisch abgebildeten Drucksystem 32 (z.B. einem Kettenspanner eines Kettenfahrzeugs) über ein Gewinde 13 anbringbare Grundkörper 9 das Überdruckventil 1 sowie als weiteres Ventilelement das Vorspannventil 8 mit seiner Abströmöffnung 31 durchsetzt.

Am gegenüberliegenden Endbereich des Grundkörpers 9 ist das weitere Ventil 10 angebracht, welches über die Öffnung 14 durch den Bediener mit dem jeweiligen Druckmedium (Fett oder Öl) befüllt werden kann.

Die Öffnung 14 ist durch einen Verschluss 15 unter Spannung einer Feder 16 verschlossen. Im weiteren Ventil 10 ist ferner die Drossel 11 vorgesehen, um bei Zuführung des Druckmediums durch die Öffnung 14 eine gewünschte Begrenzung der Zuführgeschwindigkeit zu erreichen.

Sowohl das Vorspannventil 8 als auch das Überdruckventil 1 sind drehbar um die Längsachse des Grundkörpers 9 angebracht und können bei der Montage derart ausgerichtet werden, dass sie vom Bediener vorteilhaft zugänglich sind.

Die Abdichtung des Vorspannventils 8 und des Überdruckventils 1 gegenüber dem Grundkörper 9 bzw. dem nicht abgebildeten Drucksystem erfolgt durch übliche Dichtungen 17, 18, 19 und 20 (insbesondere Dichtringe).

Das Überdruckventil 1 besitzt gemäß FIG 4 ferner eine Messöffnung 7, mit einer abnehmbaren Mess-/Entlastungskupplung 12 mit Entlastungbohrung 30 zur Messung des Drucks des jeweiligen Druckmediums und gegebenenfalls zum Entlasten des Mediums im Drucksystem.

Hierdurch wird es ermöglicht, auf einfache und besonders gut zugängliche Art und Weise den Druck im Drucksystem zu messen und ggf. beim Messen festgestellten Überdruck über die Entlastungsbohrung 30 der Messkupplung 12 abzubauen.

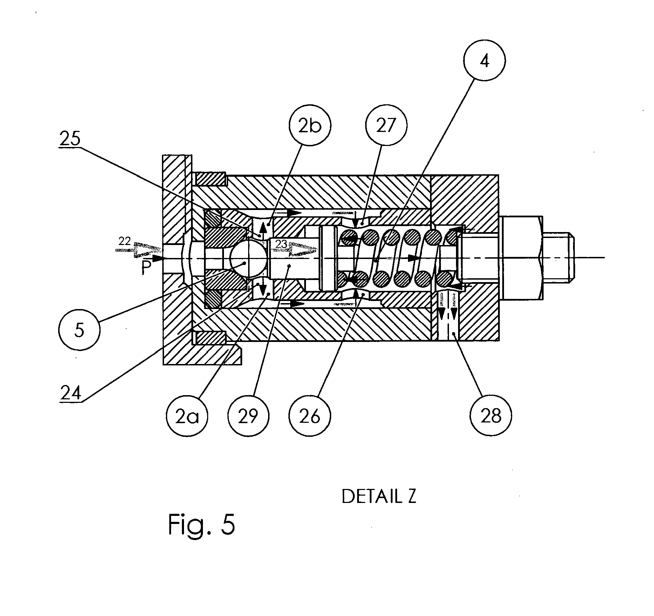

Gegenüberliegend zur Messöffnung 7 befinden sich der eigentliche Überdruckbereich des Überdruckventils 1, der näher in FIG 5 erläutert wird.

Im Falle eines Überdrucks fließt das Druckmedium in Richtung 22 in den Überdruckbereich des Überdruckventils 1. Hierdurch wird das Dichtelement 5 (z.B. eine Kugel) in Richtung 23 abgehoben und das Druckmedium folgt den Flussrichtungen 24 und 25.

Daraufhin folgt das Druckmedium über die Abströmöffnungen 2a und 2b vorgegebenen Kanälen im Überdruckventil 1 und tritt dann über Öffnungen 26 und 27 in den Federraum 4 ein, wodurch zum einen ein Abfluss in die Abflussbohrung 28 zum Druckabbau erfolgen kann und ferner das Druckmedium dazu verwendet wird, einen Kolben 29 (insbesondere ein Differenzkolben) zu beaufschlagen, so dass das Dichtelement 5 wieder entgegen Richtung 23 bewegt wird und eine Schließung des Überdruckventils 1 erfolgt.

Hierdurch wird eine besonders vorteilhafte Schnellschließung des Überdruckventils erreicht.

### BEZUGSZEICHENLISTE

- 1: Überdruckventil
- 2: Abströmöffnung
- 3: Druckfeder
- 4: Federraum
- 5: Dichtelement
- 7: Messöffnung
- 8: Vorspannventil
- 9: Grundkörper
- 10: Ventil
- 11: Drossel
- 12: Meß - /Entlastungskupplung
- 13: Gewinde
- 14: Öffnung
- 15: Verschluss
- 16: Feder
- 17: Dichtung
- 18: Dichtung
- 19: Dichtung
- 20: Dichtung
- 22: Richtung
- 23: Richtung
- 24: Pfeil
- 25: Pfeil
- 26: Öffnung
- 27: Öffnung
- 28: Abflussbohrung (Überdruckventil)
- 29: Kolben
- 30: Entlastungsbohrung
- 31: Abströmöffnung (Vorspannventil)
- 32: Drucksystem (Anschluß)

## Patentansprüche

1. Sicherheitsventil zur Absicherung eines Drucksystems, z.B. eines Drucksystems zur Vorspannung von Ketten an Kettenfahrzeugen, insbesondere für ein Druckmedium wie Fett oder Öl, mit einem Grundkörper (9) zum Anschluss an das Drucksystem und einem Überdruckventil (1), welches in unterschiedlichen Drehpositionen an dem Grundkörper (9) anbringbar ist,
**gekennzeichnet dadurch, dass** das Sicherheitsventil ferner ein Vorspannventil (8) aufweist, welches in unterschiedlichen Drehpositionen an dem Grundkörper (9) anbringbar ist.

2. Sicherheitsventil nach Anspruch 1, wobei das Überdruckventil (1) eine Abströmöffnung (2) zur Abführung des unter einem Überdruck stehenden Druckmediums aufweist.

3. Sicherheitsventil nach Anspruch 1 oder 2, wobei das Überdruckventil (1) eine Druckfeder (3) in einem Federraum (4) und ein von der Druckfeder (3) beaufschlagtes Dichtelement (5) aufweist.

4. Sicherheitsventil nach Anspruch 2 und 3, wobei die Abströmöffnung (2) eine Verbindung zum Federraum (4) aufweist.

5. Sicherheitsventil nach einem der vorhergehenden Ansprüche, wobei das Überdruckventil (1) eine Messöffnung (7) zur Anbringung einer Mess-/Entlastungskupplung (12) zur Bestimmung des Mediendrucks und gegebenenfalls zum Druckabbau über eine Entlastungsbohrung (30) aufweist.

6. Sicherheitsventil nach einem der vorhergehenden Ansprüche, wobei am Grundkörper (9) ein weiteres Ventil (10) zur Zuführung von Druckmedium in das Drucksystem anbringbar ist.

7. Sicherheitsventil nach Anspruch 6, wobei das weitere Ventil (10) eine Drossel (11) zur Begrenzung der Zuführgeschwindigkeit bei Zuführung des Druckmediums aufweist.

8. Sicherheitsventil nach Anspruch 7, wobei die Drossel (11) als Lochscheibe ausgebildet ist.

## Claims

1. Safety valve for securing a pressure system, for example a pressure system for pretensioning tracks of tracked vehicles, in particular for a pressure medium such as grease or oil, having a main body (9) for connection to the pressure system and a pressure-relief valve (1) which can be attached to the main body (9) in different rotational positions, **characterized in that**, furthermore, the safety valve has a counterbalance valve (8) which can be attached to the main body (9) in different rotational positions.

2. Safety valve according to Claim 1, the pressure-relief valve (1) having an outflow opening (2) for discharging the pressure medium which is under a positive pressure.

3. Safety valve according to Claim 1 or 2, the pressure-relief valve (1) having a compression spring (3) in a spring space (4) and a sealing element (5) which is loaded by the compression spring (3).

4. Safety valve according to Claims 2 and 3, the outflow opening (2) having a connection to the spring space (4).

5. Safety valve according to one of the preceding claims, the pressure-relief valve (1) having a measuring opening (7) for attaching a measuring/relief coupling (12) for determining the medium pressure and optionally for dissipating the pressure via a relief bore (30).

6. Safety valve according to one of the preceding claims, it being possible for a further valve (10) to be attached to the main body (9) for feeding pressure medium into the pressure system.

7. Safety valve according to Claim 6, the further valve (10) having a restrictor (11) for limiting the feed speed when the pressure medium is fed in.

8. Safety valve according to Claim 7, the restrictor (11) being configured as a perforated disc.

## Revendications

1. Soupape de sécurité pour la protection d'un système de pression, par exemple d'un système de pression pour la pré-tension de chenilles de véhicules chenillés, en particulier pour un fluide sous pression tel que de la graisse ou de l'huile, comprenant un corps de base (9) pour le raccordement au système de pression et une soupape de surpression (1) qui peut être montée sur le corps de base (9) en différentes positions angulaires,
**caractérisée en ce que** la soupape de sécurité comprend en outre une soupape de précontrainte (8) qui peut être montée sur le corps de base (9) en différentes positions angulaires.

2. Soupape de sécurité selon la revendication 1, dans laquelle la soupape de surpression (1) comprend une ouverture de sortie (2) pour l'évacuation du fluide sous pression soumis à une surpression.

3. Soupape de sécurité selon la revendication 1 ou 2, dans lequel la soupape de surpression (1) comprend un ressort de compression (3) dans une chambre de ressort (4) et un élément d'étanchéité (5) sollicité par le ressort de compression (3).

4. Soupape de sécurité selon les revendications 2 et 3, dans laquelle l'ouverture de sortie (2) comprend une connexion à la chambre de ressort (4).

5. Soupape de sécurité selon l'une quelconque des revendications précédentes, dans laquelle la soupape de surpression (1) comprend une ouverture de mesure (7) pour le montage d'un raccord de mesure/décharge (12) pour déterminer la pression de fluide et éventuellement pour réduire la pression par le biais d'un alésage de décharge (30).

6. Soupape de sécurité selon l'une quelconque des revendications précédentes, dans laquelle une soupape supplémentaire (10) peut être montée sur le corps de base (9) pour l'alimentation du système de pression en fluide sous pression.

7. Soupape de sécurité selon la revendication 6, dans laquelle la soupape supplémentaire (10) comprend un étrangleur (11) pour limiter la vitesse d'alimentation lors de l'alimentation en fluide sous pression.

8. Soupape de sécurité selon la revendication 7, dans laquelle l'étrangleur (11) est réalisé sous forme de disque perforé.
